# EUROPÄISCHE PATENTSCHRIFT

(11) **EP 3 443 840 B1**
(45) Veröffentlichungstag und Bekanntmachung des Hinweises auf die Patenterteilung: **17.03.2021**
(21) Anmeldenummer: 18401058.5
(22) Anmeldetag: 05.07.2018
(51) Int. Cl.: A01M 7/00

(54) **VERTEILERGESTÄNGE**
DISTRIBUTION RODS
BARRE DE DISTRIBUTION

(30) Priorität: 18.08.2017 DE 102017118861
(43) Veröffentlichungstag der Anmeldung: 20.02.2019
(73) Patentinhaber: Amazonen-Werke H. Dreyer GmbH & Co. KG, 49205 Hasbergen (DE)
(72) Erfinder: Austermann, Stefan, 48291 Telgte (DE); Kowollik, Daniel, 47443 Moers (DE)

(56) Entgegenhaltungen:
- EP-A1- 1 522 218
- EP-A1- 1 568 274
- WO-A1-2012/087893
- US-A1- 2004 238 659
- US-A1- 2016 038 961

## Beschreibung

Die Erfindung betrifft ein Verteilergestänge gemäß dem Oberbegriff des Patentanspruches 1.

Ein derartiges Verteilergestänge ist in EP 3 053 436 A1 beschrieben. Dieses Verteilergestänge für eine landwirtschaftliche Verteilmaschine besteht aus mehreren zueinander in Transportstellung einklappbaren und in Arbeitsstellung ausklappbaren Gestängeabschnitten. Auf jeder Seite des Verteilergestänges sind die Endabschnitte mittels Ausweichgelenken und um aufrechte Achsen gegen eine nachgebende Federkraft erzeugenden Federeinrichtung in auf die Fahrtrichtung bezogene Vorwärts- und/oder Rückwärtsrichtung beim Auftreffen auf Hindernissen ausweichbar angeordnet. Die Ausweichgelenkanordnungen weisen zwei übereinander liegende Gelenkanordnungen auf, wobei die erste als Kugelgelenk ausgebildet ist und die zweite aus zwei komplementären Gelenkelementen besteht. Eines der komplementären Gelenkelemente ist als geschlossenes ringförmiges Element ausgebildet und die beabstandet zueinander angeordneten zweiten Gelenkelemente sind innerhalb dieses geschlossenen ringförmigen Elements versetzt- und/oder bewegbar angeordnet. Für die horizontalen Ausweichbewegungen ergeben sich somit zwei Achsen, die jeweils durch das Kugelgelenk und einen der Anlagepunkte der zweiten Gelenkelemente verlaufen. Für das Einklappen der Endabschnitte ist eine weitere Achse vorgesehen die durch ein gesondertes Gelenk gebildet und von einem zusätzlichen Aktor betätigt wird.

Diese Anordnung hat sich hinsichtlich ihrer Funktion in der Praxis durchaus bewährt. Allerdings ist der relativ aufwendige Aufbau des Gelenks nachteilig, da dieses hierzu eine Vielzahl an Zwischenelementen nutzt.

Der Erfindung liegt die Aufgabe zu Grunde, eine vereinfachte Gelenkanordnung für die Ausweichgelenke zu schaffen, die gleichzeitig auch als Klappgelenk genutzt werden kann.

Diese Aufgabe wird erfindungsgemäß durch die kennzeichnenden Merkmale des Anspruchs 1 gelöst.

Infolge dieser Maßnahme wird sichergestellt, dass sich der Umfang der gelenkbildenden Elemente auf eine Mindestanzahl besonders leichtbauender und einfach ausgebildeter Bauteile beschränkt und ein direkter Kraftfluss entsteht. So wird eine besonders einfache Verbindung zwischen den Endabschnitten des Gestänges und den jeweiligen benachbarten innen liegenden Gestängeabschnitten erreicht, die in Arbeitsstellung des Gestänges eine ausreichend steife Ausgestaltung gewährleistet.

Eine erfindungsgemäße Ausgestaltung der Ausweichgelenke wird dadurch erreicht, dass die zumindest zwei Ebenen zumindest annährend parallel zum Boden beabstandet übereinander angeordnet sind.

Eine besonders vorteilhafte Ausgestaltung wird dadurch erreicht, dass die Ausweichgelenke zumindest in Arbeitsstellung jeweils durch mindestens zwei auf die Fahrtrichtung bezogen hintereinanderliegende Gelenkeinrichtungen in jeder der Ebenen gebildet wird, wobei sich in jeder Ebene eine zumindest annährend horizontale Achse ergibt und die Gelenkeinrichtungen zumindest in Arbeitsstellung in den beabstandeten Ebenen genau übereinander angeordnet sind, wobei sich mindestens zwei annährend vertikale Achsen ergeben. Somit ergibt sich für die Anordnung, dass die Ausweichgelenke jeweils durch insgesamt zumindest vier Gelenkeinrichtungen gebildet werden.

Infolge dieser Maßnahmen werden die für die Ausweich- und Klappfunktion notwendigen Achsen geschaffen, wobei sich die Anzahl der Gelenkeinrichtungen auf eine Mindestanzahl beschränkt.

Damit der Endabschnitt immer sicher an dem benachbarten Abschnitt des Verteilergestänges gehalten wird und nach Ausweich- oder Klappbewegungen sicher in die vorgesehene Position zurückkehrt, ist vorgesehen, dass eine Gelenkeinrichtung aus einer Gelenkaufnahme und einem Gelenkkopf gebildet wird, wobei die Gelenkaufnahme und der Gelenkkopf ein konkav und konvex geformtes Verbindungspaar bilden und die jeweilige Federkraft erzeugende Haltevorrichtung zwischen dem jeweiligen Endabschnitt und dem jeweiligen benachbarten innen liegenden Gestängeabschnitt angeordnet ist und die jeweiligen Endabschnitte ausweichbar gegenüber den innen liegenden Gestängeabschnitten hält, dass die Haltevorrichtung zumindest in Arbeitsstellung die Gelenkköpfe in Anlage an die Gelenkaufnahmen ausweichbar zueinander hält.

Eine robuste Ausgestaltung und vorteilhafte Funktionserfüllung wird dadurch erreicht, dass die Federeinrichtung durch zumindest zwei Hydraulikzylinder ausgebildet ist.

In Arbeitsstellung ist die Vorrichtung somit beim Auftreffen auf Hindernissen dazu ausgebildet, Ausweichbewegungen der Endabschnitte in horizontaler Richtung über zumindest eine der zumindest annährend vertikalen Achsen und vertikaler Richtung, vorzugsweise Aufwärtsrichtung, über zumindest eine zumindest annährend horizontale Achse zuzulassen.

In einer Weiterbildung der Anordnung ist auf dem Obergurt und darunterliegend unter dem Untergurt der Endabschnitte jeweils ein Verbindungselement angeordnet, welches zur Aufnahme eines Arretierungsmittels eingerichtet ist. In vorteilhafter Weise befinden sich die Verbindungselemente in einer annährend vertikalen Achse mit zumindest zwei der Gelenkeinrichtungen und bilden, durch die Aufnahme der Arretierungsmittel in den übereinanderliegenden Verbindungselementen, jeweils ein übliches Drehgelenk, so dass diese zusammen eine festgelegte vertikale Achse ergeben. Infolge dieser Maßnahme ist die Vorrichtung dazu einrichtet anhand der arretierten, zumindest annährend vertikalen Achsen eine Klappbewegung von vorzugsweise zumindest annährend 180° der Endabschnitte zu ermöglichen und so die Einnahme einer Transportstellung zu ermöglichen.

Weitere Einzelheiten der Erfindung sind der Beispielsbeschreibung und den Zeichnungen zu entnehmen. Die Zeichnungen zeigen
- Fig.1: das Verteilergestänge einer als Pflanzenschutzspritze ausgebildeten landwirtschaftlichen Verteilmaschine in der Ansicht von hinten und in Prinzipdarstellung,
- Fig.2: das in Fahrtrichtung gesehen rechte Ausweichgelenk zwischen dem Endabschnitt und dem benachbarten innen liegenden Gestängeabschnitt in Arbeitsposition,
- Fig.3: das Ausweichgelenk gemäß Fig. 2 in perspektivischer Darstellung,
- Fig.4: Gelenkeinrichtung gemäß Fig. 3 in Detailansicht
- Fig.5: das Ausweichgelenk gemäß Fig. 2 in Draufsicht,
- Fig.6: das Ausweichgelenk gemäß Fig. 2 in Ausweichstellung nach vorn in perspektivischer Darstellung,
- Fig.7: das Ausweichgelenk gemäß Fig. 6 in Draufsicht,
- Fig.8: das Ausweichgelenk gemäß Fig. 2 in Ausweichstellung nach oben in perspektivischer Darstellung,
- Fig.9: das Ausweichgelenk gemäß Fig. 8 in Ansicht von hinten,
- Fig.10: das Ausweichgelenk gemäß Fig. 2 mit arretierter vertikaler Achse in perspektivischer Darstellung,
- Fig.11: arretierte vertikale Achse gemäß Fig. 9 in Detailansicht und
- Fig.12: das in Fahrtrichtung gesehen rechte Ausweichgelenk zwischen dem Endabschnitt und dem benachbarten innen liegenden Gestängeabschnitt in Transportposition.

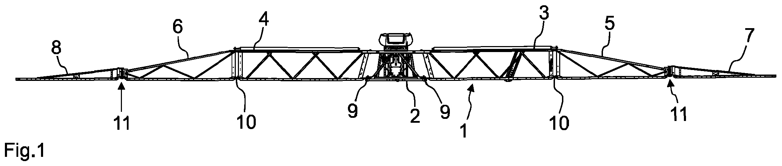

Das Verteilergestänge 1 einer als Pflanzenschutzspritze ausgebildeten landwirtschaftlichen Verteilmaschine weist die mehreren zueinander in Transportstellung einklappbaren und in Arbeitsstellung, wie in Fig. 1 dargestellt ist, ausklappbaren Gestängeabschnitte 2, 3, 4, 5, 6, 7, 8 auf. Die Gestängeabschnitte 2, 3, 4, 5, 6 sind mittels Gelenken 9, 10 jeweils miteinander verbunden. Auf jeder Seite des Verteilergestänges 1 ist ein Endabschnitt 7, 8 angeordnet, welches jeweils mittels eines Ausweichgelenkes 11 am inneren benachbarten Gestängeabschnitt 5, 6 des Verteilergestänges 1, bezogen auf die Fahrtrichtung in Vorwärts- und/oder Rückwärtsrichtung und Aufwärtsrichtung beim Auftreffen auf Hindernissen ausweichbar angeordnet ist.

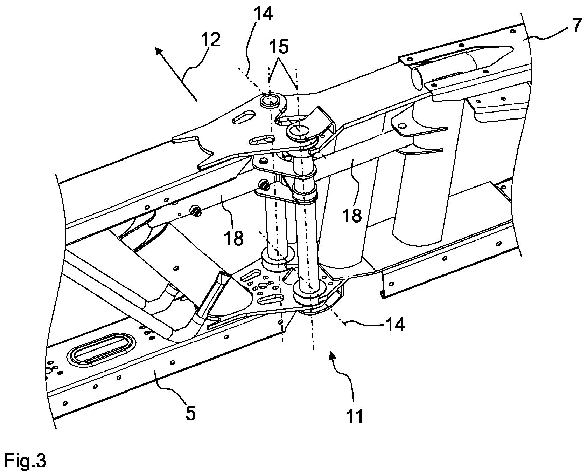

Jedes Ausweichgelenk 11 weist in zwei, annährend parallel zum Boden liegenden Ebenen jeweils zwei zur Fahrtrichtung 12 hintereinander liegende Gelenkeinrichtungen 12 auf, wodurch sich in Arbeitsstellung zwei zumindest annährend horizontale Achsen 14 ergeben, wie Fig. 3 zeigt. Somit ergibt sich, dass ein Ausweichgelenk 11 durch vier Gelenkeinrichtungen 13 gebildet wird. Diese sind hierbei, zumindest in Arbeitsstellung in den parallel beabstandeten Ebenen genau übereinander angeordnet, so dass sich zwei annährend vertikale Achsen 15 ergeben, wie Fig. 3 zeigt.

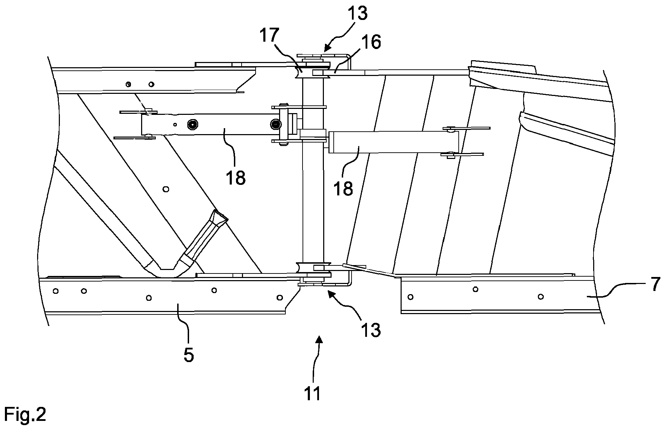

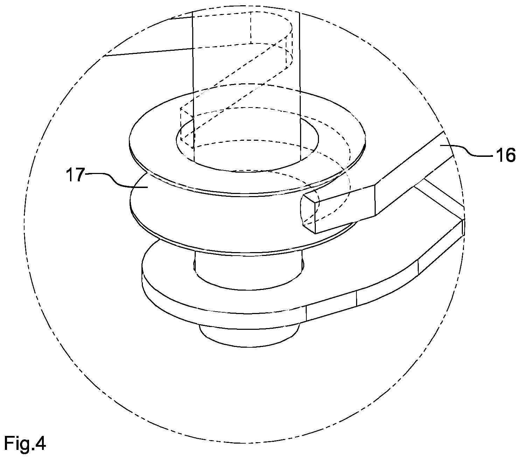

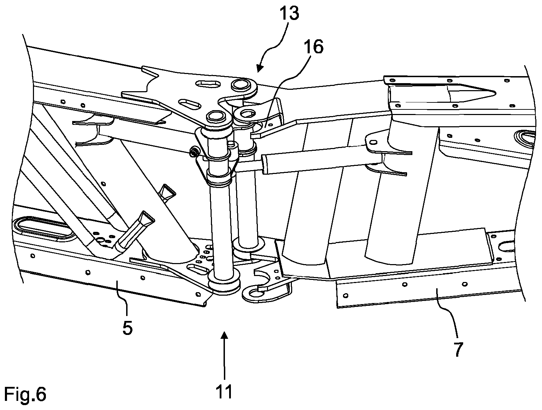

Eine Gelenkeinrichtung 13 wird dabei jeweils gebildet durch einen Gelenkkopf 16, der am Endabschnitt 7,8 befestigt ist, und eine Gelenkaufnahme 17 am jeweils benachbarten innenliegenden Gestängeabschnitt 5, 6. Gemäß Fig. 4 ist die Gelenkaufnahme 17 als zylindrischer Aufnahmekörper mit einer konkaven Wölbung am innen liegenden Gestängeabschnitt 5, 6 ausgebildet. Der Gelenkkopf 16 bildet hierzu das Gegenstück und ist als halbrunde, offene Klaue mit konvexer Wölbung am jeweiligen Endabschnitt 7, 8 befestigt. Somit sind im Ausführungsbeispiel Gelenkaufnahme 17 und Gelenkkopf 16 als konkav und konvex geformtes Verbindungspaar gebildet. Zwischen dem jeweiligen Endabschnitt 7, 8 und dem jeweils benachbarten innenliegenden Gestängeabschnitt 5, 6 ist eine als zwei Hydraulikzylinder 18 ausgebildete nachgebende Federkraft erzeugende Federeinrichtung angeordnet. Durch diese Federeinrichtung werden in Arbeitsstellung die Gelenkköpfe 16 gegen die Gelenkaufnahmen 17 gezogen, so dass in den vier Koppelpunkten Druckspannungen entstehen, wie die Fig. 2 -4 zeigen. Das komplementäre Verbindungspaar Gelenkkopf 16 und Gelenkaufnahme 17 werden durch die von den Hydraulikzylindern 18 auf die Gestängeabschnitte 5, 6, 7, 8 wirkenden Kräfte in Anlage gehalten und bilden so eine ausreichend steife Verbindung in Arbeitsstellung. Bei Auftreten einer Gegenkraft zur Federeinrichtung, beispielsweise durch das Auftreffen auf ein Hindernis, heben die Gelenkköpfe 16 am Endabschnitt 7, 8 einfach aus der Gelenkaufnahme 17 am innen liegenden Gestängeabschnitt 5, 6 ab, wie Fig. 6 - 9 zeigen. Sobald die Gegenkraft abnimmt oder verschwindet, beispielsweise weil das Hindernis passiert wurde, wird der jeweilige Endabschnitt 7, 8 durch die Federkraft wieder in Arbeitsposition gebracht, so dass die Gelenkköpfe 16 wieder in Anlage zu den Gelenkaufnahmen 17 gebracht werden.

Auf diese Weise werden die Endabschnitte 7, 8 ausweichbar zu dem jeweils benachbarten innenliegenden Gestängeabschnitt 5, 6 gehalten. In vorteilhafterweise ist den Hydraulikzylindern 18 ein nicht dargestellter Hydraulikspeicher zugeordnet, über den durch die Hydraulikzylinder 18 ausgeübte und auf die Gestängeabschnitte 5, 6, 7, 8 einwirkende Federkraft erzeugt wird.

Durch die Ausführung der Gelenkköpfe 16 und Gelenkaufnahmen 17 als konvex und konkave Verbindungspartner wird sichergestellt, dass die komplementären Gelenkelemente nach einer Ausweichbewegung problemlos durch die Federeinrichtung wieder in Anlage gebracht werden können und sich anhand ihrer Form zentrieren.

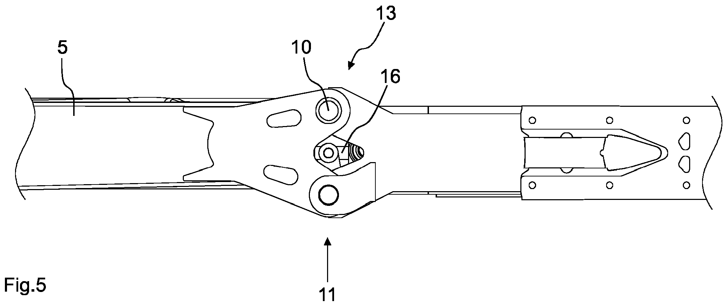

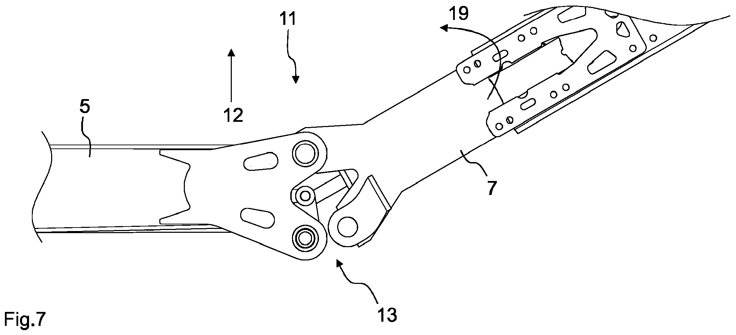

Die Funktionsweise des vorbeschriebenen erfindungsgemäßen Ausweichgelenks 11 zwischen dem jeweiligen Endabschnitt 7, 8 und dem jeweiligen innen liegenden benachbarten Gestängeabschnitt 5, 6 ist Folgende:
Wenn ein in Arbeitsposition befindlicher Endabschnitt 7, 8, der gemäß den Fig. 2 - 5 mittels eines Ausweichgelenkes 11 mit dem jeweiligen innen liegenden Gestängeabschnitt 5, 6 verbunden ist, bei Rückwärtsfahren entgegen der Fahrtrichtung 12 auf ein Hindernis trifft wird dieser nach vorn in Pfeilrichtung 19 gedrückt, wie Fig. 7 zeigt. Hierbei dreht der Endabschnitt 7 über die in Fahrtrichtung 12 vordere vertikale Achse 15 während die in Fahrtrichtung 12 hinteren Gelenkeinrichtungen 13 sich auseinander bewegen, wie Fig. 6 und 7 zeigen. Die Gelenkköpfe 16 am Endabschnitt 7, 8 heben dabei aus der Gelenkaufnahme 17 ab. Bei dieser Ausweichbewegung werden die beiden Kolbenstangen der Hydraulikzylinder 18 ausgelenkt, so dass nach dem Passieren des Hindernisses durch Einfahren der Hydraulikzylinder 18 die notwenige Rückstellkraft erzeugt wird um in die Arbeitsposition gemäß den Fig. 2 -5 zurückzukehren. Die Gelenkköpfe 16 befinden sich wieder in Anlage an die Gelenkaufnahmen 17 und werden über die Federkraft, die von den Hydraulikzylindern 18 erzeugt wird, verspannt.

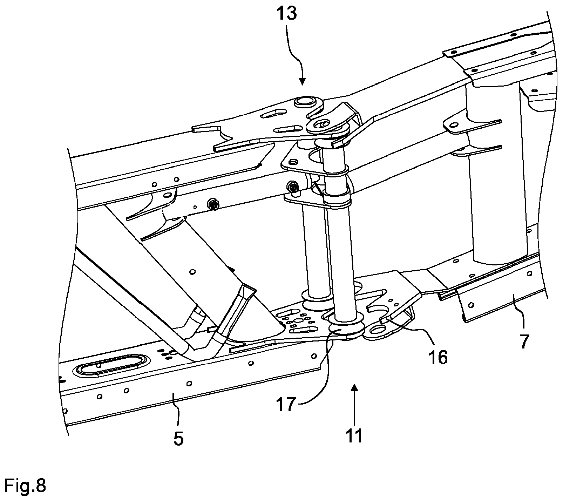

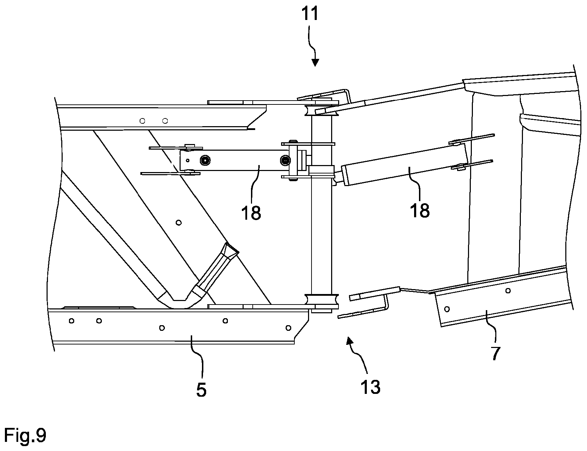

Gleiches geschieht in umgekehrter Weise bei Vorwärtsfahrt in Fahrtrichtung 12 und Auftreffen eines der Endabschnitte 7, 8 auf ein Hindernis. Bei Auftreffen einer der äußeren Gestängeabschnitte 7, 8 auf den Boden, wird dieser nach oben gedrückt und dreht um die obere horizontale Achse 14. Die unteren beiden Gelenkeinrichtungen 13 bewegen sich hierbei auseinander, wie Fig. 8, 9 zeigen.

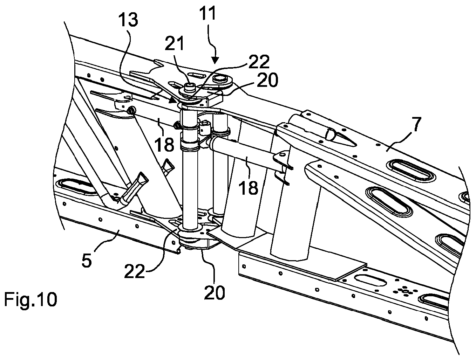

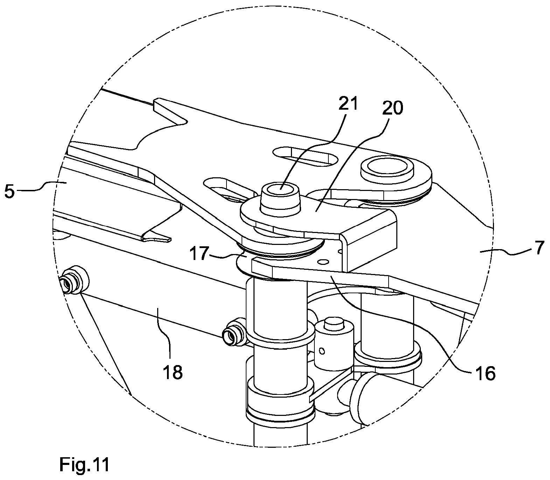

Gemäß den Fig. 10 - 12 ist auf dem Obergurt und unter dem Untergurt der Endabschnitte 7, 8 jeweils ein Verbindungselement 20 zur Aufnahme eines Arretierungsmittels 21 vorgesehen. In vorteilhafterweise ist das Arretierungsmittel 21 an der zum Einschieben durch die Verbindungselemente 20 vorgesehenen Seite verrundet. In besonders vorteilhafterweise wird das Arretierungsmittel 21 als Kolbenstange eines einfach wirkenden Hydraulikzylinders, der mit einer Rückstellfeder versehen sein kann, sich in der mit Verbindungselementen 20 versehenen vertikalen Achse 15 befindet und somit nicht zu sehen ist, ausgeführt.

Durch die Aufnahme jeweils eines Arretierungsmittels 21 in den übereinanderliegenden Verbindungselementen 20 werden die zugehörigen Gelenkeinrichtungen 13 zu einem festgelegten Drehgelenk. Weitere, zur Arretierung der Achse, geeignete Verriegelungsmechanismen können beispielsweise halbkreisförmig ausgeführte Klauenelemente sein, die die Achse nach rotatorisch oder translatorisch ausgeführter Schwenkbewegung umschließen.

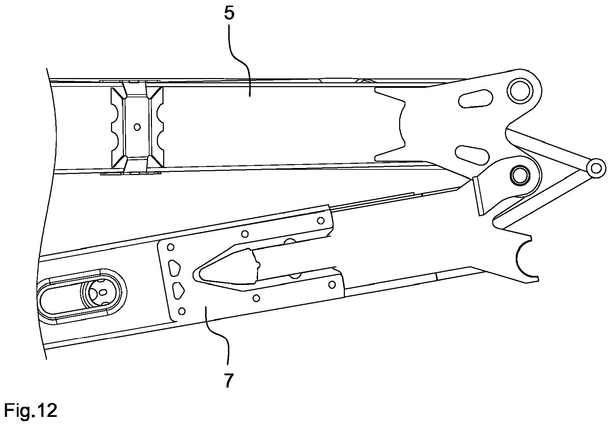

Infolge dieser Maßnahme ist das Verteilergestänge 1 dazu geeignet Klappbewegungen der Endabschnitte 7, 8 gegenüber den jeweils innen liegenden benachbarten Gestängeabschnitten 5, 6 auszuführen. Hierzu werden die Hydraulikzylinder 18 betätigt, so dass der jeweilige Endabschnitt 7, 8 nur noch um die arretierte Achse drehen kann und folglich eine Klappbewegung von annährend 180° ausführt. Auf diese Weise wird die Transportstellung gemäß Fig. 12 eingenommen.

### Bezugszeichenliste

- 1: Verteilergestänge
- 2 - 8: Gestängeabschnitt
- 7, 8: Endabschnitt
- 9, 10: Gelenk
- 11: Ausweichgelenk
- 12: Fahrtrichtung
- 13: Gelenkeinrichtung
- 14: horizontale Achse
- 15: vertikale Achse
- 16: Gelenkkopf
- 17: Gelenkaufnahme
- 18: Hydraulikzylinder
- 19: Pfeilrichtung
- 20: Verbindungselement
- 21: Arretierungsmittel

## Patentansprüche

1. Verteilergestänge für eine landwirtschaftliche Verteilmaschine mit mehreren zueinander in Transportstellung einklappbaren und in Arbeitsstellung ausklappbaren Gestängeabschnitten und mit auf jeder Seite des Verteilergestänges mittels mehreren Gelenkeinrichtungen aus zwei komplementären und auseinander bewegbaren Gelenkelementen gebildeten Ausweichgelenken und um zumindest eine Achse gegen eine nachgebende Federkraft erzeugende Haltevorrichtung und/oder Federeinrichtung in auf die Fahrtrichtung bezogene Vorwärts- und/oder Rückwärtsrichtung und/oder Aufwärtsrichtung beim Auftreffen auf Hindernissen ausweichbar angeordneten Endabschnitten, wobei die Haltevorrichtung und/oder Federeinrichtung zwischen dem jeweiligen Endabschnitt des Gestänges und dem jeweiligen benachbarten innen liegenden Gestängeabschnitt angeordnet ist und die jeweiligen Endabschnitte ausweichbar gegenüber den innen liegenden Gestängeabschnitten hält, wobei die Ausweichgelenke (11) zumindest in Arbeitsstellung jeweils durch mehrere Gelenkeinrichtungen (13) in zumindest zwei zumindest annährend parallel zum Boden beabstandet übereinander angeordneten Ebenen gebildet werden und die Endabschnitte (7, 8) des Gestänges dadurch mit dem jeweiligen benachbarten innen liegenden Gestängeabschnitt (5, 6) gekoppelt sind, **dadurch gekennzeichnet, dass** die Ausweichgelenke (11) jeweils durch insgesamt zumindest vier Gelenkeinrichtungen (13) gebildet werden.

2. Verteilergestänge Anspruch 1, **dadurch gekennzeichnet, dass** die Ausweichgelenke (11) zumindest in Arbeitsstellung jeweils durch mindestens zwei auf die Fahrtrichtung (12) bezogen hintereinanderliegende Gelenkeinrichtungen (13) in jeder der Ebenen gebildet wird, wobei sich in jeder Ebene eine zumindest annährend horizontale Achse (14) ergibt.

3. Verteilergestänge nach zumindest einem der vorstehenden Ansprüche, **dadurch gekennzeichnet, dass** die Gelenkeinrichtungen (13) zumindest in Arbeitsstellung in den beabstandeten Ebenen genau übereinander angeordnet sind, wobei sich mindestens zwei annährend vertikale Achsen (15) ergeben.

4. Verteilergestänge nach zumindest einem der vorstehenden Ansprüche, **dadurch gekennzeichnet, dass** eine Gelenkeinrichtung (13) aus einer Gelenkaufnahme (17) und einem Gelenkkopf (16) gebildet wird.

5. Verteilergestänge nach zumindest einem der vorstehenden Ansprüche, **dadurch gekennzeichnet, dass** die Gelenkaufnahme (17) und der Gelenkkopf (16) ein konkav und konvex geformtes Verbindungspaar bilden.

6. Verteilergestänge nach zumindest einem der vorstehenden Ansprüche, **dadurch gekennzeichnet, dass** die jeweilige Federkraft erzeugende Haltevorrichtung zwischen dem jeweiligen Endabschnitt (7, 8) und dem jeweiligen benachbarten innen liegenden Gestängeabschnitt (5, 6) angeordnet ist und die jeweiligen Endabschnitte (7, 8) ausweichbar gegenüber den innen liegenden Gestängeabschnitten (5, 6) hält, dass die Haltevorrichtung zumindest in Arbeitsstellung die Gelenkköpfe (16) in Anlage an die Gelenkaufnahmen (17) ausweichbar zueinander hält.

7. Verteilergestänge nach zumindest einem der vorstehenden Ansprüche, **dadurch gekennzeichnet, dass** die Vorrichtung beim Auftreffen auf Hindernissen dazu ausgebildet ist, Ausweichbewegungen der Endabschnitte (7, 8) in horizontaler Richtung über zumindest eine der zumindest annährend vertikalen Achsen (15) und vertikaler Richtung, vorzugsweise Aufwärtsrichtung, über zumindest eine zumindest annährend horizontale Achse (14) zuzulassen.

8. Verteilergestänge nach zumindest einem der vorstehenden Ansprüche, **dadurch gekennzeichnet, dass** auf dem Obergurt und darunterliegend unter dem Untergurt der Endabschnitte (7, 8) jeweils ein Verbindungselement (20) angeordnet ist, welches zur Aufnahme eines Arretierungsmittels (21) eingerichtet ist.

9. Verteilergestänge nach zumindest einem der vorstehenden Ansprüche, **dadurch gekennzeichnet, dass** sich die Verbindungselemente (20) in einer annährend vertikalen Achse (15) mit zumindest zwei der Gelenkeinrichtungen (13) befinden.

10. Verteilergestänge nach zumindest einem der vorstehenden Ansprüche, **dadurch gekennzeichnet, dass** durch die Aufnahme der Arretierungsmittel (21) in den übereinanderliegenden Verbindungselementen (20) jeweils ein übliches Drehgelenk entsteht, die zusammen eine festgelegte vertikale Achse (15) bilden.

11. Verteilergestänge nach zumindest einem der vorstehenden Ansprüche, **dadurch gekennzeichnet, dass** die Vorrichtung dazu einrichtet ist anhand der arretierten, zumindest annährend vertikalen Achsen (15) eine Klappbewegung von vorzugsweise zumindest annährend 180° der Endabschnitte (7, 8) zu ermöglichen und so die Einnahme einer Transportstellung zu ermöglichen.

## Claims

1. Distributor boom for an agricultural distribution machine, having a plurality of boom portions that are able to be folded in with respect to one another in a transporting position and are able to be folded out in a working position, and having, on each side of the distributor boom, deflecting joints formed, by means of a plurality of joint devices, from two complementary joint elements that are movable apart, and end portions that are arranged so as to be deflectable about at least one axis with respect to a holding apparatus, generating an elastic spring force, and/or spring device in a forward and/or rearward direction with respect to the direction of travel and/or an upward direction when striking obstacles, wherein the holding apparatus and/or spring device is arranged between the respective end portion of the boom and the respective adjacent internal boom portion and holds the respective end portions in a deflectable manner with respect to the internal boom portions, wherein the deflecting joints (11) are formed, at least in the working position, in each case by a plurality of joint devices (13) in at least two planes that are arranged in a spaced-apart manner one above the other at least approximately parallel to the ground, and the end portions (7, 8) of the boom are, as a result, coupled to the respective adjacent internal boom portion (5, 6), **characterized in that** the deflecting joints (11) are each formed by a total of at least four joint devices (13) .

2. Distributor boom according to Claim 1, **characterized in that** the deflecting joints (11) are formed, at least in the working position, in each case by at least two joint devices (13) located one after the other with respect to the direction of travel (12) in each of the planes, wherein an at least approximately horizontal axis (14) arises in each plane.

3. Distributor boom according to at least one of the preceding claims, **characterized in that** the joint devices (13) are arranged, at least in the working position, exactly one above the other in the spaced-apart planes, wherein at least two approximately vertical axes (15) arise.

4. Distributor boom according to at least one of the preceding claims, **characterized in that** a joint device (13) is formed from a joint receptacle (17) and a joint head (16).

5. Distributor boom according to at least one of the preceding claims, **characterized in that** the joint receptacle (17) and the joint head (16) form a connecting pair shaped in a concave and convex manner.

6. Distributor boom according to at least one of the preceding claims, **characterized in that** the respective holding apparatus generating a spring force is arranged between the respective end portion (7, 8) and the respective adjacent internal boom portion (5, 6) and holds the respective end portions (7, 8) in a deflectable manner with respect to the internal boom portions (5, 6), **in that** the holding apparatus, at least in the working position, holds the joint heads (16) in abutment against the joint receptacles (17) in a deflectable manner with respect to one another.

7. Distributor boom according to at least one of the preceding claims, **characterized in that** the apparatus is configured, upon striking obstacles, to allow deflecting movements of the end portions (7, 8) in a horizontal direction via at least one of the at least approximately vertical axes (15) and in a vertical direction, preferably an upward direction, via at least one approximately horizontal axis (14).

8. Distributor boom according to at least one of the preceding claims, **characterized in that**, on the upper chord and, therebeneath, under the lower chord of the end portions (7, 8), in each case a connecting element (20) is arranged, which is set up to receive a locking means (21) .

9. Distributor boom according to at least one of the preceding claims, **characterized in that** the connecting elements (20) are located on an approximately vertical axis (15) with at least two of the joint devices (13).

10. Distributor boom according to at least one of the preceding claims, **characterized in that**, as a result of the locking means (21) being received in the connecting elements (20) located one above the other, a conventional swivel joint arises in each case, said swivel joints together forming a fixed vertical axis (15).

11. Distributor boom according to at least one of the preceding claims, **characterized in that** the apparatus is set up, on the basis of the locked, at least approximately vertical axes (15), to allow a folding movement of preferably at least approximately 180° of the end portions (7, 8) and thus to allow a transport position to be taken up.

## Revendications

1. Ensemble de barres d'épandage destiné à une épandeuse agricole et comprenant une pluralité de portions d'ensemble de barres, qui peuvent être repliées en position de transport, et dépliées en position de travail, les unes par rapport aux autres, et de portions d'extrémité disposées de manière à pouvoir s'écarter lors de la rencontre d'obstacles vers l'avant et/ou vers l'arrière, relativement au sens de déplacement et/ou vers le haut de chaque côté de l'ensemble de barres d'épandage à l'aide d'une pluralité de moyens d'articulation formés de deux éléments d'articulation complémentaires qui peuvent être écartés l'un de l'autre et autour d'au moins un axe en s'opposant à un dispositif de retenue et/ou un moyen à ressort générant une force de ressort élastique, le dispositif de retenue et/ou le moyen à ressort étant disposés entre la portion d'extrémité respective de l'ensemble de barres et la portion d'ensemble de barres adjacente respective située à l'intérieur et maintenant les portions d'extrémité respectives de manière à ce qu'elles puissent s'écarter par rapport aux portions d'ensemble de barres situées à l'intérieur, les articulations de compensation (11) étant chacune formées, au moins en position de travail, par une pluralité de moyens d'articulation (13) dans au moins deux plans disposés à distance l'un au-dessus de l'autre au moins approximativement parallèlement au sol, et les portions d'extrémité (7, 8) de l'ensemble de barres étant ainsi accouplées à la portion d'ensemble de barres (5, 6) adjacente respective située à l'intérieur, **caractérisé en ce que** les articulations de compensation (11) sont chacune formées par un total d'au moins quatre moyens d'articulation (13).

2. Ensemble de barres d'épandage selon la revendication 1, **caractérisé en ce que** les articulations de compensation (11) sont formées, au moins en position de travail, dans chacun des plans par au moins deux moyens d'articulation (13) situés l'un derrière l'autre relativement au sens de déplacement (12), un axe (14) au moins approximativement horizontal étant obtenu dans chaque plan.

3. Ensemble de barres d'épandage selon l'une au moins des revendications précédentes, **caractérisé en ce que** les moyens d'articulation (13) sont disposés, au moins en position de travail, exactement l'un au-dessus de l'autre dans les plans situés à distance, au moins deux axes (15) approximativement verticaux étant obtenus.

4. Ensemble de barres d'épandage selon l'une au moins des revendications précédentes, **caractérisé en ce qu'**un moyen d'articulation (13) est formé d'un logement d'articulation (17) et d'une tête d'articulation (16).

5. Ensemble de barres d'épandage selon l'une au moins des revendications précédentes, **caractérisé en ce que** le logement d'articulation (17) et la tête d'articulation (16) forment une paire de liaison concave et convexe.

6. Ensemble de barres d'épandage selon l'une au moins des revendications précédentes, **caractérisé en ce que** le dispositif de retenue générant une force de ressort respective est disposé entre la portion d'extrémité respective (7, 8) et la portion d'ensemble de barres (5, 6) adjacente respective située à l'intérieur et maintient les portions d'extrémité respectives (7, 8) de manière à ce qu'elles puissent s'écarter par rapport aux portions d'ensemble de barres (5, 6) situées à l'intérieur, et **en ce que** le dispositif de retenue maintient, au moins en position de travail, les têtes d'articulation (16) en appui sur les logements d'articulation (17) de manière à ce qu'elles puissent s'écarter l'une l'autre.

7. Ensemble de barres d'épandage selon l'une au moins des revendications précédentes, **caractérisé en ce que** le dispositif est conçu pour permettre, lors de la rencontre d'obstacles, des mouvements d'évitement des portons d'extrémité (7, 8) dans la direction horizontale sur l'un au moins des axes (15) au moins approximativement verticaux et dans la direction verticale, de préférence vers le haut, sur au moins un axe (14) au moins approximativement horizontal.

8. Ensemble de barres d'épandage selon l'une au moins des revendications précédentes, **caractérisé en ce qu'**un élément de liaison (20), qui est destiné à recevoir un moyen de blocage (21), est disposé sur la membrure supérieure et, en dessous, sous la membrure inférieure des portions d'extrémité (7, 8).

9. Ensemble de barres d'épandage selon l'une au moins des revendications précédentes, **caractérisé en ce que** les éléments de liaison (20) sont situés sur un axe (15) approximativement vertical comprenant au moins deux des moyens d'articulation (13).

10. Ensemble de barres d'épandage selon l'une au moins des revendications précédentes, **caractérisé en ce que** le fait de loger des moyens de blocage (21) dans les éléments de liaison superposés (20) permet d'obtenir à chaque fois une articulation rotative classique, lesquelles articulations rotatives forment conjointement un axe vertical fixe (15).

11. Ensemble de barres d'épandage selon l'une au moins des revendications précédentes, **caractérisé en ce que** le dispositif est conçu pour permettre, en s'appuyant sur les axes bloqués (15) au moins approximativement verticaux, un mouvement de basculement de préférence d'au moins approximativement 180° des portions d'extrémité (7, 8), et donc de prendre une position de transport.
